# EUROPÄISCHE PATENTSCHRIFT

(11) **EP 0 979 254 B1**
(45) Veröffentlichungstag und Bekanntmachung des Hinweises auf die Patenterteilung: **25.09.2002**
(21) Anmeldenummer: 98917112.9
(22) Anmeldetag: 21.04.1998
(51) Int. Cl.: C09J 7/04, B60J 11/00

(54) **ABDECKMATERIAL FÜR LACKIERTE OBERFLÄCHEN**
MASKING MATERIAL FOR LACQUERED SURFACES
MATERIAU MASQUE POUR SURFACES LAQUEES

(30) Priorität: 21.04.1997 DE 19716712
(43) Veröffentlichungstag der Anmeldung: 16.02.2000
(73) Patentinhaber: SCAPA GROUP PLC, Blackburn, Lancashire BB2 6AY (GB); Jaband GmbH Selbstklebeprodukte, 81243 München (DE)
(72) Erfinder: SALTHOUSE, Peter, W., Cheshire WA16 9DZ (GB); GRADER, Günter, D-82166 Gräfelding (DE)
(74) Vertreter: Liesegang, Roland, Dr.-Ing.
(86) Internationale Anmeldenummer: EP9802343
(87) Internationale Veröffentlichungsnummer: WO98047977

(56) Entgegenhaltungen:
- GB-A- 2 094 809
- US-A- 4 735 837
- DATABASE WPI Section Ch, Week 9006 Derwent Publications Ltd., London, GB; Class A96, AN 90-040169 XP002072938 & JP 01 316 315 A (TAISHO PHARM CO LTD)
- PATENT ABSTRACTS OF JAPAN vol. 006, no. 118 (C-111), 2. Juli 1982 & JP 57 044687 A (MOMOKAWA TOSHIKO), 13. März 1982

## Beschreibung

Die Erfindung betrifft ein Abdeckmaterial in Form von Blättern oder auf sich selbst aufgerollten Bändern für lackierte Oberflächen bestehend aus einem mit einem selbstklebenden Haftmittel beschichteten biegsamen Träger.

Bekannte Abdeckmaterialien dieser Art haben als Träger eine Kunststofffolie oder auch Krepp-Papier und als selbstklebendes Haftmittel solche auf der Basis von Gemischen von Acrylat-, Methacrylat- oder Styrolpolymeren, natürlichem oder synthetischem Kautschuk. Diese Abdeckmaterialien erfüllen in vielen Fällen befriedigend ihren Zweck, genügen jedoch nicht weitergehenden Anforderungen, die beim Schutz von Kraftfahrzeuglackierungen allgemein gestellt werden, besonders wenn solche Lackierungen sich auf Kunststoffteilen der Kraftfahrzeug-Karosserie, wie Stoßfängern, sogenannten Bumpern, befinden. Auf solchen Kunststoffteilen kann nämlich die Lackierung nur bei Temperaturen bis höchstens 80 - 90°C getrocknet werden und ist daher vor allem anfänglich besonders empfindlich gegen mechanische und chemische Einwirkungen, die auch von einem Abdeckmaterial selbst ausgehen können.

Ein Abdeckmaterial zum Schutz von Lackierungen von KraftfahrzeugKarosserien oder Karosserie-Teilen unmittelbar von deren Herstellung, während der Montage, des Transports und bis zur Endauslieferung des Kraftfahrzeugs soll leicht und schnell verarbeitbar sein, sicher haften, keine Verfärbung des Lacks sowie keinerlei Abdrücke (imprints) im Lack verursachen, licht-, UV- und langzeit-witterungsbeständig und nicht zuletzt leicht und rückstandsfrei ablösbar sein.

Weitere Forderungen, die an ein solches spezielles Abdeckmaterial gestellt werden, sind:
- es soll sich ohne Faltenbildung auf unregelmäßig gewölbte Oberflächen von Hand ohne Werkzeug aufbringen lassen ;
- es soll von Hand ohne Ausfasern zerreißbar sein;
- es soll ein Durchtrocknen des Lacks und Abtrocknen von Feuchtigkeit, wie Waschwasser oder Regen nicht beeinträchtigen;
- es soll die Lackierung auch gegen mechanische Beschädigung, wie Kratzer, schützen.

Es wurde gefunden, daß diese bisher nicht erfüllten Forderungen sich erfüllen lassen durch ein Abdeckmaterial auf Gewebebasis mit einem selbstklebenden Haftmittsl auf Basis von Polyisobuten-Polymeren, das keinen Zusatz anderer üblicherweise für Haftmittel verwendeter Polymeren enthält.

Die gestellte Aufgabe wird daher erfindungsgemäß gelöst durch ein Abdeckmaterial der eingangs angegebenen Art mit den im Patentanspruch 1 angegebenen Merkmalen.

Bevorzugte Ausführungsformen der Erfindung und deren Anwendung sind in den Unteransprüchen angegeben.

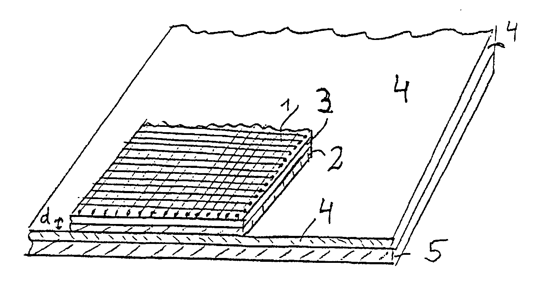

Die Erfindung wird weiter erläutert durch die folgende Beschreibung mit Bezug auf die beigefügte Figur, welche schematisch den Aufbau des Abdeckmaterials zeigt.

Das erfindungsgemäße Abdeckmaterial weist einen Träger 1 aus einem Baumwoll- oder Rayongewebe auf, das von Hand längs eines Kett- oder Schußfadens zerreißbar ist, so daß eine im wesentlichen glatte Abrißkante entsteht. Dieser Träger 1 ist mit einem Polyisobutylenkleber als Haftmittel 2 beschichtet, wobei der Polyisobutylenkleber durch Mischen von Polyisobutylenprodukten mit verschiedenen Viskositäts-Molekulargewichten (M_{S}-Staudinger) zwischen 5.000 und 100.000 hergestellt ist, um ihm die gewünschte Selbstklebefähigkeit mit guter Haftung am Träger und leichter und rückstandsfreier Ablösbarkeit von der lackierten Oberfläche zu verleihen. Geeignet sind z.B. Gemische von 40 - 60 Gew.-% eines Polyisobutylens mit niedrigem und 60 - 40 Gew.-% eines solchen mit hohem Molekulargewicht. Polyisobutylene des oben angegebenen Typs sind im Handel verfügbar, z.B. Vistanex der Fa. Exxon Chemical, und sind von Natur aus und im Gegensatz zu Acryl-, Methacryl- oder Styrolpolymeren, die ebenfalls als Klebmittel bekannt sind, licht-, UV- und witterungsbeständig. Es wurde außerdem gefunden, daß sie im Gegensatz zu diesen anderen bekannten Haftmitteln auch auf frischen Lackoberflächen keine Imprints oder Flecken verursachen, da sie mit den üblichen, mit Zwei- Komponenten-Lacken hergestellten lackierten Oberflächen nicht reagieren.

Der Polyisobutylenkleber wird auf das Baumwoll- oder Rayon-Gewebe durch Kalandern oder Aufbringen einer Lösung des Polyisobutylenklebers in einem nicht polaren Lösungsmittel, wie Petroleum-Kohlenwasserstoff, und Trocknen des beschichteten Materials aufgebracht. Bei Verwendung einer Polyisobutylenkleberlösung kann zweckmäßigerweise das Gewebe zuvor mit einem üblichen Primer 3 behandelt werden, beispielsweise mit einem üblichen UV-stabilen Primer.

Als Trägermaterial wird beispielsweise ein Baumwollgewebe mit einem Gewicht von mindestens 60 g/m², beispielsweise etwa 90 g/m² verwendet.

Die Gesamtdicke des Abdeckmaterials beträgt mindestens 0,3 mm, vorzugsweise etwa 0,5 mm, seine Haftung an Stahl gemäß AFERA 4001 mindestens 1,0 N/cm und seine Klebrigkeit (Stahlkugeltest - PSTC Methode) etwa 5 - 10 cm.

Besonders vorteilhaft ist es, daß die Schicht des Polyisobutylenklebers 2 die Poren des Webstoffes 1 bei entsprechender Dosierung nicht vollständig verschließt und damit ein "Atmen" und Durchtritt von Luft oder Wasserdampf bis zur lackierten Oberfläche 4 ermöglicht, was von besonderer Bedeutung ist, wenn eine mit dem Abdeckmaterial versehene lackierte Oberfläche der Witterung, Nässe und Frost oder auch Waschwasser ausgesetzt ist, indem Feuchtigkeit, die in Zwischenräume unter dem Abdeckmaterial gelangt, auch wieder verdunsten kann, was bei bekannten Abdeckmaterialien mit einem Träger aus Kunststofffolie nicht möglich ist.

Das erfindungsgemäße Abdeckmaterial hat infolge seines den Träger bildenden Gewebes 1 die Eigenschaft, daß es sich auch auf unregelmäßig gebogene Oberflächen eines Kraftfahrzeugkarosserieteils 5 von Hand und ohne Werkzeug faltenfrei aufbringen läßt, da es eine gewisse Dehnbarkeit in jeder Richtung seiner Fläche und Biegsamkeit aufweist. Das Gewebe selbst ist gegen Licht, UV-Strahlung, Lösungsmittel, Witterung, Feuchtigkeit und Schimmel hinreichend beständig.

Infolge seiner Dicke von mindestens 0,3 mm schützt das Abdeckmaterial die abgedeckte lackierte Oberfläche auch vor mechanischer Beschädigung, wie Kratzern oder Schnitten, welche von einem bekannten Abdeckmaterial mit einer Kunststofffolie als Träger nicht abgefangen werden können, da Kratzer oder Schnitte die Folie und den darunter liegenden Lack zerstören.

Das erfindungsgemäße Abdeckmaterial läßt sich als Band ohne ein Trennband auf sich selbst auf eine Rolle aufwickeln, von der es zum Gebrauch leicht abgezogen werden kann. Da es mit einer Lackoberfläche selbst unmittelbar nach deren Herstellung nicht reagiert, kann es beispielsweise auf einen frisch lackierten Kraftfahrzeug-Stoßfänger (Bumper) aus Kunststoff, bei dem der Lack wegen der geringen Temperaturbeständigkeit des Kunststoffmaterials bei einer niedrigen Temperatur von höchstens 80 - 90°C getrocknet wird und demgemäß verhältnismäßig weich ist, unmittelbar nach dem Trocknen auf die noch warme Lackierung von Hand aufgebracht werden, ohne daß mechanische Eindrücke oder chemische Verfärbungen des Lacks entstehen, und der Bumper ist so bereits bei den folgenden Transport- und Montageschritten bestens geschützt und das Abdeckmaterial kann auch nach der Montage des Bumpers am Kraftfahrzeug bei dessen weiterer Inspektion, Reinigung, Transport, Lagerung auch im Freien, bis unmittelbar vor Auslieferung des Kraftfahrzeugs an den Kunden verbleiben und laßt sich zu diesem Zeitpunkt problemlos und rückstandsfrei ablösen. Selbstverständlich können auch andere frisch lackierte Kraftfahrzeugoberflächen sogleich nach dem Trocknen durch das erfindungsgemäße Abdeckmaterial mit entsprechenden Vorteilen geschützt werden.

Das erfindungsgemäße Abdeckmaterial 1 kann nach Gebrauch leicht und ohne Umweltgefährdung durch Deponieren oder Verbrennen entsorgt werden.

### Beispiel:

Als Träger wurde ein Baumwottgewebe mit 64 x 56 Fäden pro 2,52 cm und einem Gewicht von 88 g/m² ± 10% verwendet. Dieses Gewebe wurde mit einer Lösung von 100 Gewichtsteilen eines Gemisches von 40 % Polyisobutylen mit Viskositäts-Molekulargewicht Mₛ von 5.000 und 60 % Polyisobutylen vom Viskositäts-Molekulargewicht Mₛ 100.000 in 300 Gewichtsteilen Petroleum-Kohlenwasserstoff als Lösungsmittel gelöst und beschichtet, um nach dem Trocknen eine Gesamtdicke des Abdeckmaterials von 0,4 mm zu erhalten. Die Dehnbarkeit des Materials nach AFERA 4005 betrug 10 %, seine Haftung an Stahl nach AFERA 4001 1,0 N/cm, seine Bruchfestigkeit nach AFERA 4004 65 N/cm.

## Patentansprüche

1. Abdeckmaterial in Form von Blättern oder auf sich selbst aufgerollten Bändern für lakkierte Oberflächen, insbesondere zum Abdecken eines lackierten Kraftfahrzeug-Karosserie-Teils, besonders eines lackierten Bumpers aus Kunststoffmaterial, bestehend aus einem mit einem selbstklebenden Haftmittel beschichteten biegsamen Träger, **dadurch gekennzeichnet, daß** der Träger (1) ein aus einem Baumwoll- oder Rayon-Gewebe geschnittenes Blatt oder Band ist, das längs eines Kett- oder Schußfadens von Hand zerreißbar ist, und das Haftmittel (2) ein Polyisobutylenkleber bestehend aus einem Gemisch von Polyisobutylenen mit Molekulargewichten (Mₛ) zwischen 5.000 und 100.000 ohne Zusatz von Acryl-, Methacryl- oder Styrolpolymeren ist, der mit der lakkierten Oberfläche nicht reagiert, licht-, UV- und witterungsbeständig ist und mittels eines Primers (3) mit dem Träger verbunden ist, und das Abdeckmaterial eine Dicke von mindestens 0,3 mm und eine Haftung an Stahl nach AFERA 4001 von mindestens 1 N/cm, gemessen als 180° Abzugskraft hat, die damit abgedeckte lackierte Oberfläche nicht verändert und von dieser leicht ablösbar ist.

2. Abdeckmaterial nach Anspruch 1, **dadurch gekennzeichnet, daß** das Baumwollgewebe ein Gewicht von mindestens 60 g/m² hat.

3. Abdeckmaterial nach einem der Ansprüche 1 oder 2, **dadurch gekennzeichnet, daß** die Schicht des Polyisobutylenklebers (2) die Poren des Gewebes (1) nicht vollständig verschließt.

4. Abdeckmaterial nach einem der Ansprüche 1 bis 3, **dadurch gekennzeichnet, daß** es eine Dehnbarkeit bis zu 10 % aufweist.

5. Verfahren zur Herstellung des Abdeckmaterials nach einem der Ansprüche 1 bis 4, **dadurch gekennzeichnet, daß** der Polyisobutylenkleber (2) aus einer Lösung oder durch Kalandern auf den Träger (1) aufgebracht wird.

6. Kraftfahrzeug-Karosserieteile mit lackierter Oberfläche, wie Bumper, die wenigstens teilweise mit einem Abdeckmaterial nach einem der Ansprüche 1 bis 4 abgedeckt sind.

7. Verwendung eines Abdeckmaterials nach einem der Ansprüche 1 bis 4 zum Abdecken der von der Trocknungs-Endstufe der Herstellung noch warmen lackierten Oberfläche eines Kraftfahrzeugs, besonders einer noch warmen lackierten Außenfläche eines Bumpers aus Kunststoffmaterial zum Zeitpunkt der Herstellung desselben bis gegebenenfalls zum Zeitpunkt der Auslieferung des fertigen Fahrzeugs.

## Claims

1. A cover material in the form of sheets or rolled-up strips for painted surfaces, particularly for covering a painted vehicle body part, especially a painted plastic bumper, the material comprising a flexible substrate coated with a pressure-sensitive adhesive, **characterised in that** the substrate (1) is a sheet or strip cut from a cotton or rayon fabric and tearable by hand along a warp or weft thread, and the adhesive (2) is a polyisobutylene adhesive comprising a mixture of polyisobutylenes with molecular weights (Mₛ) between 5000 and 100 000 without addition of acrylic, methacrylic or styrene polymers and non-reactive with the painted surface and resistant to light, ultra-violet and weathering, and connected to the substrate by a primer (3), and the cover material has a thickness of at least 0.3 mm and an adhesion on steel to AFERA 4001 of at least 1 N/cm, measured as a 180° pulling-off force, and does not alter the painted surface covered therewith and is easily detachable therefrom.

2. A cover material according to claim 1, **characterised in that** the cotton fabric has a weight of at least 60 g/m².

3. A cover material according to claim 1 or 2, **characterised in that** the layer of polyisobutylene adhesive (2) does not completely close the pores of the fabric (1).

4. A cover material according to any of claims 1 to 3, **characterised in that** it has a stretchability of up to 10%.

5. A method of producing the cover material according to any of claims 1 to 4, **characterised in that** the polyisobutylene adhesive (2) is applied to the substrate (1) from a solution or by calenders.

6. A motor-vehicle body part with a painted surface such as a bumper, covered at least partly with a material according to any of claims 1 to 4.

7. Use of a cover material according to any of claims 1 to 4 for covering the painted surface of a motor vehicle while still hot from the final drying stage of production, particularly a still-hot painted outer surface of a plastic bumper at the time of production thereof and up to, if required, the time of delivery of the finished vehicle.

## Revendications

1. Matériau masque sous forme de feuilles ou de rouleaux enroulés sur eux-mêmes pour surfaces laquées, notamment pour masquer une pièce de carrosserie de véhicule, notamment un pare-chocs laqué en matériau plastique, constitué d'un support flexible revêtu d'un agent d'adhésion auto-adhésif, **caractérisé en ce que** le support (1) est un rouleau ou une feuille coupée dans un tissu en coton ou rayone, que l'on peut arracher par un fil de chaîne ou un fil de trame à la main, et l'agent d'adhésion (2) est un adhésif en polyisobubylène constitué d'un mélange de polyisobutylènes ayant des poids moléculaires (Mₛ) situés entre 5 000 et 100 000 sans ajout de polymères acryliques, méthacryliques ou styréniques, qui ne réagit pas avec la surface laquée, est résistant à la lumière, aux UV et aux intempéries et est relié au support au moyen d'un amorceur (3) et le matériau masque a une épaisseur d'au moins 0,3 mm et une adhésion sur l'acier selon AFERA 4001 d'au moins 1 N/cm, mesuré comme force de traction à 180°, ne modifie pas la surface laquée ainsi masquée et est facilement décollable de celle-ci.

2. Matériau masque selon la revendication 1, **caractérisé en ce que** le tissu en coton a un poids d'au moins 60 g/m².

3. Matériau masque selon l'une des revendications 1 ou 2, **caractérisé en ce que** la couche de l'adhésif en polyisobutylène (2) n'obture pas complètement les pores du tissu (1).

4. Matériau masque selon l'une des revendications 1 à 3, **caractérisé en ce qu'**il présente une extensibilité allant jusqu'à 10 %.

5. Procédé de fabrication du matériau masque selon l'une des revendications 1 à 4, **caractérisé en ce que** l'adhésif en polyisobutylène (2) est appliqué à partir d'une solution ou par calandrage sur le support (1).

6. Pièces de carrosserie de véhicule à surface laquée, comme le pare-chocs, qui sont au moins partiellement masquées par un matériau masque selon l'une des revendications 1 à 4.

7. Utilisation d'un matériau masque selon l'une des revendications 1 à 4 pour masquer la surface laquée d'un véhicule, encore chaude de par l'étape finale de séchage de la fabrication, en particulier d'une surface externe laquée encore chaude d'un pare-chocs en matériau plastique, du moment de la fabrication de celui-ci jusqu'à éventuellement le moment de la livraison du véhicule fini.
